# EUROPÄISCHE PATENTSCHRIFT

(11) **EP 3 224 505 B1**
(45) Veröffentlichungstag und Bekanntmachung des Hinweises auf die Patenterteilung: **07.04.2021**
(21) Anmeldenummer: 15801818.4
(22) Anmeldetag: 27.11.2015
(51) Int. Cl.: B29C 45/00, F16J 15/32, F16J 15/56, F16L 11/12, F16L 33/30, F16J 15/3236, F16J 15/328, F16J 15/3284, F16J 15/3212

(54) **DICHTELEMENT UND VERFAHREN ZUM HERSTELLEN EINES DICHTELEMENTS**
SEALING ELEMENT AND METHOD FOR PRODUCING A SEALING ELEMENT
ÉLÉMENT D'ÉTANCHÉITÉ ET SON PROCÉDÉ DE FABRICATION

(30) Priorität: 28.11.2014 DE 102014224378
(43) Veröffentlichungstag der Anmeldung: 04.10.2017
(73) Patentinhaber: ElringKlinger AG, 72581 Dettingen (DE)
(72) Erfinder: HOCKER, Klaus, 74379 Ingersheim (DE); SCHUHMACHER, Walter, 74321 Bietigheim-Bissingen (DE)
(74) Vertreter: Hoeger, Stellrecht & Partner Patentanwälte mbB
(86) Internationale Anmeldenummer: PCT/EP2015/077942
(87) Internationale Veröffentlichungsnummer: WO 2016/083584

(56) Entgegenhaltungen:
- EP-A1- 2 559 922
- WO-A2-2007/033072
- DE-A1-102007 063 216
- DE-A1-102012 112 594
- GB-A- 940 903
- GB-A- 1 494 214
- US-A- 3 281 512
- US-B1- 6 557 857

## Beschreibung

Die vorliegende Erfindung betrifft ein Dichtelement, insbesondere zur Verwendung als Stangendichtung, Kolbendichtung und/oder Wellendichtung.

Ein solches Dichtelement ist beispielsweise aus der DE 10 2012 112 594 A1 bekannt. Weitere Dichtelemente sind aus der WO 2007/033072 A2, der GB 1 494 214 A und der EP 2 559 922 A1 bekannt.

Der vorliegenden Erfindung liegt die Aufgabe zugrunde, ein Dichtelement bereitzustellen, welches eine zuverlässige Abdichtung gewährleistet und einfach und kostengünstig herstellbar ist.

Diese Aufgabe wird erfindungsgemäß durch ein Dichtelement mit den Merkmalen des Anspruchs 1 gelöst.

Das Dichtelement, insbesondere der Grundkörper des Dichtelements, ist vorzugsweise endkonturnah hergestellt.

Eine endgültige äußere Form ist insbesondere diejenige Form, welche der Grundkörper im Benutzungszustand des Dichtelements oder im zur Benutzung bereiten Zustand aufweist.

Eine endgültige äußere Form ist ferner insbesondere eine Form, in welcher keine weitere Bearbeitung, beispielsweise keine Umformung der Oberfläche, mehr stattfindet, bevor der Grundkörper als Bestandteil des Dichtelements bestimmungsgemäß verwendet wird.

Vorteilhaft kann es sein, wenn der Grundkörper nur abschnittsweise eine Oberflächenbeschaffenheit aufweist, welche ein in einem Hochdruckprozess und/oder in einem Hochtemperaturprozess geformter und/oder fertiggestellter Körper aufweist.

Günstig kann es sein, wenn der Grundkörper nur abschnittsweise eine Oberflächenbeschaffenheit aufweist, welche ein in einem Spritzgussprozess geformter und/oder fertiggestellter Körper aufweist.

Bei einer Ausgestaltung der Erfindung kann vorgesehen sein, dass der Grundkörper im Wesentlichen ringförmig ausgebildet ist.

Der Grundkörper umfasst vorzugsweise die bezüglich der Ringform radial inneren Dichtabschnitte sowie einen oder mehrere radial äußere Dichtabschnitte.

Nachfolgend wird zur Vereinfachung im Singular auf die Dichtabschnitte eingegangen. Selbstverständlich können dabei jedoch auch stets mehrere Dichtabschnitte mit einzelnen oder mehreren der genannten Merkmale vorgesehen sein.

Der Grundkörper kann beispielsweise kreisringförmig ausgebildet sein.

Ein radial innerer Dichtabschnitt dient erfindungsgemäß der dynamischen Abdichtung an einem längs einer axialen Richtung verschieblichen Bauteil, insbesondere einem Kolben oder einer Stange.

Ein radial äußerer Dichtabschnitt dient vorzugsweise einer statischen Abdichtung an einem Gehäuse einer Dichtungsvorrichtung.

Erfindungsgemäß ist vorgesehen, dass der radial äußere Dichtabschnitt in dem Hochdruckprozess und/oder in dem Hochtemperaturprozess seine endgültige äußere Form erhalten hat.

Bei einer Weiterbildung der Erfindung kann vorgesehen sein, dass der Grundkörper zwei bezüglich einer axialen Richtung einander gegenüberliegende Enden umfasst, welche insbesondere im Benutzungszustand des Dichtelements mit voneinander zu trennenden Fluiden in Kontakt kommen.

Nur eines der Enden oder beide Enden haben die endgültige äußere Form vorzugsweise in dem Hochdruckprozess und/oder in dem Hochtemperaturprozess erhalten.

Alternativ oder ergänzend hierzu kann vorgesehen sein, dass nur eines der Enden oder beide Enden die endgültige äußere Form durch spanende Bearbeitung erhalten haben.

Vorzugsweise sind eine oder beide Enden mit einer oder mehreren Federelementaufnahmen zur Aufnahme eines oder mehrerer Federelemente versehen. Günstig kann es sein, wenn der Grundkörper ein, insbesondere spritzgießbares, thermoplastisches Kunststoffmaterial umfasst oder aus einem, insbesondere spritzgießbaren, thermoplastischen Kunststoffmaterial gebildet ist.

Erfindungsgemäß ist das thermoplastische Kunststoffmaterial ein Fluor-Thermoplastmaterial, beispielsweise ein vollfluoriertes thermoplastisches Kunststoffmaterial.

Der Grundkörper ist ein Spritzgussbauteil, insbesondere ein Kunststoff-Spritzgussbauteil.

Das Dichtelement kann beispielsweise ein federunterstützter Nutring sein.

Das Dichtelement umfasst dann vorzugsweise ein oder mehrere Federelemente, welche beispielsweise aus einem Federstahl gebildet sind und zumindest näherungsweise eine Ringform aufweisen.

Ein oder mehrere Federelemente können dabei beispielsweise einen senkrecht zu einer Umfangsrichtung genommenen U-förmigen, V-förmigen oder L-förmigen Querschnitt aufweisen.

Die vorliegende Erfindung betrifft ferner die Verwendung eines Dichtelements, insbesondere eines erfindungsgemäßen Dichtelements, als Stangendichtung, Kolbendichtung und/oder Wellendichtung.

Das Dichtelement wird dabei vorzugsweise in einer Kraftstoffpumpe und/oder einer Kolbenpumpe zur Abdichtung zweier Medienräume verwendet.

Die erfindungsgemäße Verwendung weist vorzugsweise einzelne oder mehrere der im Zusammenhang mit dem erfindungsgemäßen Dichtelement beschriebenen Merkmale und/oder Vorteile auf.

Ferner betrifft die vorliegende Erfindung ein Verfahren zur Herstellung eines Dichtelements.

Der Erfindung liegt diesbezüglich die Aufgabe zugrunde, ein Verfahren bereitzustellen, mittels welchem ein zuverlässig abdichtendes Dichtelement einfach und kostengünstig herstellbar ist.

Diese Aufgabe wird erfindungsgemäß durch ein Verfahren zur Herstellung eines Dichtelements mit den Merkmalen des Anspruchs 5 gelöst.

Das erfindungsgemäße Verfahren weist vorzugsweise einzelne oder mehrere der im Zusammenhang mit dem erfindungsgemäßen Dichtelement und/oder der erfindungsgemäßen Verwendung beschriebenen Merkmale und/oder Vorteile auf.

Günstig kann es sein, wenn der Grundkörper des Dichtelements nach der Durchführung des Hochdruckprozess und/oder des Hochtemperaturprozesses nur abschnittsweise nachbearbeitet wird.

Beispielsweise kann eine lediglich einseitige abschnittsweise Nachbearbeitung, insbesondere eine axial und/oder radial einseitige Nachbearbeitung vorgesehen sein.

Es kann jedoch auch vorgesehen sein, dass der Grundkörper in axialer Richtung beidseitig und/oder in radialer Richtung beidseitig nachbearbeitet wird. Der Grundkörper wird erfindungsgemäß spanend bearbeitet.

Ergänzend hierzu kann vorgesehen sein, dass der Grundkörper zur Nachbearbeitung oder als Nachbearbeitung beschichtet wird.

Ein oder mehrere Dichtabschnitte des Dichtelements werden durch eine Bearbeitung des Grundkörpers hergestellt.

Eine oder mehrere Federelementaufnahmen zur Aufnahme eines oder mehrerer Federelemente sind vorzugsweise nicht nachbearbeitet, sondern erhalten ihre endgültige äußere Form vorzugsweise in dem Hochdruckprozess und/oder in dem Hochtemperaturprozess.

Erfindungsgemäß ist der Grundkörper aus, vorzugsweise spritzgießbarem, teilfluoriertem oder vollfluoriertem thermoplastischen Kunststoffmaterial hergestellt.

Es kann vorgesehen sein, dass der Grundkörper aus reinem PTFE-Material gebildet ist.

Der thermoplastische Kunststoff (Kunststoffmaterial) ist vorzugsweise schmelzverarbeitbar.

Der eingesetzte Kunststoff ist bevorzugt ein TFE-Copolymer mit einem Comonomeranteil von mehr als 0,5 Gew.%. Durch einen Comonomeranteil in diesem Größenordnungsbereich kann das Molekulargewicht der Polymerketten reduziert werden, ohne dass die mechanische Festigkeit des Materials beeinträchtigt wird, sodass die Schmelzviskosität herabgesetzt und eine Verarbeitung mittels Spritzguss ermöglicht wird.

Das Comonomer ist bevorzugt ausgewählt aus einem Perfluoralkylvinylether, insbesondere Perfluormethylvinylether, Hexafluorpropylen und Perfluor-(2,2-dimethyl-1,3-dioxol). Je nach Comonomeranteil handelt es sich bei dem vollfluorierten thermoplastischen Kunststoff dann um ein so genanntes schmelzverarbeitbares PTFE (Comonomeranteil bis etwa 3 Gew.%), um ein PFA (mehr als etwa 3 Gew.% Perfluoralkylvinylether als Comonomer), ein MFA (mehr als etwa 3 Gew.% Perfluormethylvinylether als Comonomer) oder ein FEP (mehr als etwa 3 Gew.% Hexafluorpropylen als Comonomer).

Das TFE-Copolymer kann auch verschiedene Comonomere umfassen. Ebenso ist es möglich, dass der vollfluorierte thermoplastische Kunststoff eine Mischung verschiedener TFE-Copolymere umfasst.

Das Material des Grundkörpers kann teilweise oder im Wesentlichen vollständig aus dem vollfluorierten thermoplastischen Kunststoff gebildet sein. Alternativ oder ergänzend hierzu kann das Material einen oder mehrere Füllstoffe umfassen, insbesondere Pigmente, reibungsvermindernde Additive und/oder die thermische Beständigkeit erhöhende Additive, um die Eigenschaften des Dichtelements weiter zu optimieren und an die jeweiligen Anforderungen anzupassen.

Das Dichtelement eignet sich insbesondere zur Abdichtung von Kolben in Kraftstoff-Hochdruckpumpen oder Kolbenpumpen für Bremssysteme (ABS, ESP, etc.).

Als thermoplastisches Kunststoffmaterial kann ferner insbesondere ein hochtemperaturbeständiges und/oder chemisch beständiges thermoplastisches Material vorgesehen sein, insbesondere PEEK, PEAK, PEI, etc. und/oder ein Compoundmaterial, umfassend ein oder mehrere der vorstehend genannten Materialien.

Insbesondere durch eine Herstellung des Grundkörpers des Dichtelements in einem Spritzgussverfahren kann eine hohe Formbeständigkeit des thermoplastischen Kunststoffmaterials erzielt werden, um letztlich insbesondere höhere Drücke abzudichten.

Ein Grundkörper eines Dichtelements kann durch Durchführung der folgenden Verfahrensschritte herstellt werden: Granulieren eines Ausgangsstoffs; Verwendung dieses Ausgangsstoffs in einem Spritzgussverfahren zur Herstellung des Grundkörpers; ggfs. Nachbearbeitung des Grundkörpers, insbesondere CNC-Bearbeitung zur Herstellung einer Innenkontur, beispielsweise eines oder mehrerer radial innerer Dichtabschnitte.

Ein fertiggestellter Grundkörper kann ggfs. mit weiteren Bauteilen des Dichtelements verbunden oder montiert und schließlich verpackt werden.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen Längsschnitt durch einen Grundkörper eines Dichtelements, wobei der Grundkörper nur teilweise seine endgültige äußere Form aufweist;
- Fig. 2: eine der Fig. 1 entsprechende schematische Darstellung des Grundkörpers, wobei der Grundkörper zur Fertigstellung einer Außenkontur bearbeitet wurde; und
- Fig. 3: eine der Fig. 1 entsprechende schematische Darstellung eines Dichtelements, welches den fertiggestellten Grundkörper und zwei Federelemente umfasst.

Gleiche oder funktional äquivalente Elemente sind in sämtlichen Figuren mit denselben Bezugszeichen versehen.

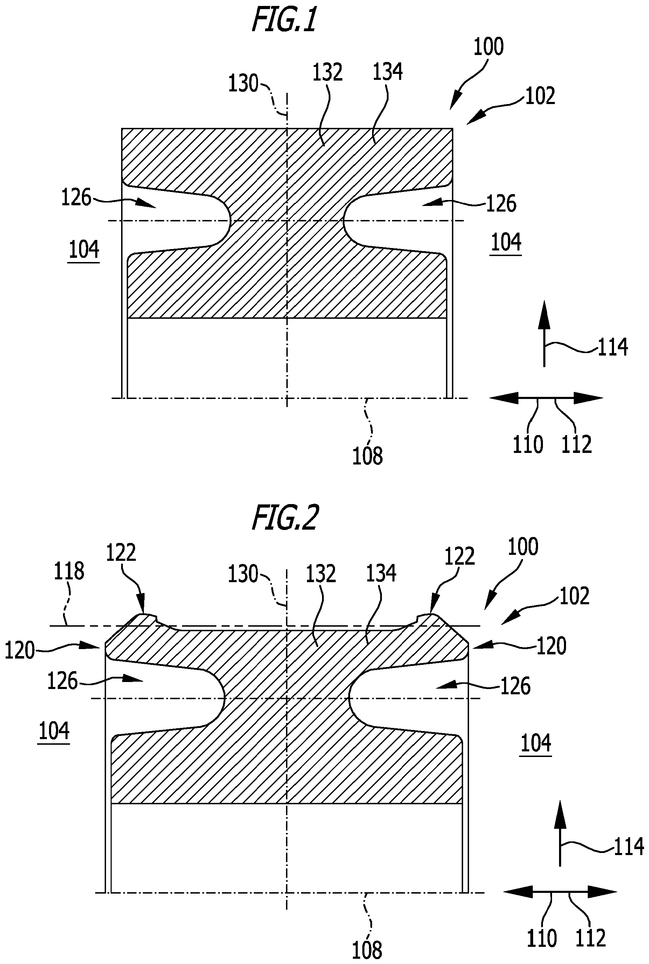

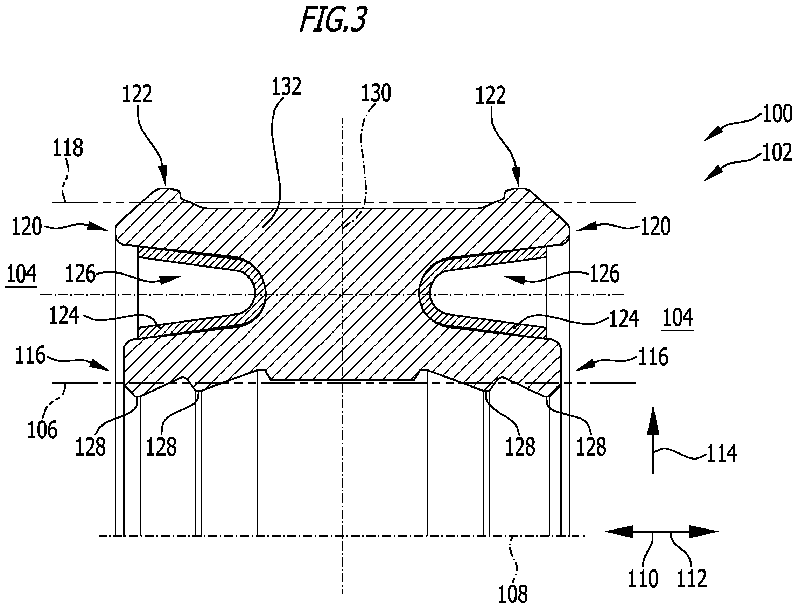

Eine in den Fig. 1 bis 3 dargestellte Ausführungsform eines als Ganzes mit 100 bezeichneten Dichtelements ist beispielsweise Bestandteil einer Hochdruckpumpe 102 und dient der Abdichtung zwischen zwei Medienräumen 104 im Bereich eines beweglichen Bauteils 106.

Das bewegliche Bauteil 106 kann beispielsweise ein Kolben der Hochdruckpumpe 102 sein.

Das bewegliche Bauteil 106 ist insbesondere durch das Dichtelement 100 hindurchgeführt.

Sowohl das bewegliche Bauteil 106 als auch das Dichtelement 100 sind dabei vorzugsweise rotationssymmetrisch um eine Symmetrieachse 108 ausgebildet.

Die Symmetrieachse 108 ist insbesondere parallel zu einer Längsachse 110 des beweglichen Bauteils 106 und des Dichtelements 100 ausgerichtet.

Das Dichtelement 100 und das bewegliche Bauteil 106 weisen im montierten Zustand eine gemeinsame Symmetrieachse 108 auf.

Die Längsachse 110 definiert vorzugsweise eine axiale Richtung 112.

Eine senkrecht zur axialen Richtung 112 ausgerichtete Richtung ist eine radiale Richtung 114.

Mittels des Dichtelements 100 sind vorzugsweise die Medienräume 104 in axialer Richtung 112 voneinander getrennt.

Das Dichtelement 100 grenzt dabei in radialer Richtung 114 nach innen gerichtet mittels zweier dynamischer Dichtabschnitte 116 an das bewegliche Bauteil 106 an.

In radialer Richtung 114 nach außen gerichtet grenzt das Dichtelement 100 an ein Gehäuse 118 der Hochdruckpumpe 102 an.

Das Dichtelement 100 ist im montierten Zustand desselben relativ zu dem Gehäuse 118 festgelegt.

Zwei den beiden Medienräumen 104 zugeordnete Abdichtbereiche 120 des Dichtelements 100 umfassen somit zusätzlich zu den dynamischen Dichtabschnitten 116 noch zwei an dem Gehäuse 118 anliegende statische Dichtabschnitte 122.

Die dynamischen Dichtabschnitte 116 dienen der dynamischen Abdichtung zwischen dem Dichtelement 100 und dem sich relativ zu dem Dichtelement 100 bewegenden, insbesondere längs der axialen Richtung 112 verschieblichen, Bauteil 106.

Zur Erzielung einer erhöhten Dichtwirkung können ein oder mehrere Federelemente 124 des Dichtelements 100 vorgesehen sein.

Das eine oder die mehreren Federelemente 124 sind insbesondere in einer oder mehreren Federelementaufnahmen 126 anordenbar oder angeordnet.

Mittels des einen oder der mehreren Federelemente 124 sind insbesondere ein oder mehrere dynamische Dichtabschnitte 116 an das bewegliche Bauteil 106 anpressbar.

Alternativ oder ergänzend hierzu kann vorgesehen sein, dass mittels des einen oder der mehreren Federelemente 124 ein oder mehrere statische Dichtabschnitte 122 an ein Gehäuse 118 der Hochdruckpumpe 102 anpressbar sind.

Jeder dynamische Dichtabschnitt 116 umfasst eine, zwei oder mehr als zwei Dichtlippen 128.

Jede Dichtlippe 128 ist vorzugsweise im Wesentlichen ringförmig und im Wesentlichen rotationssymmetrisch um die Symmetrieachse 108 ausgebildet.

Die Dichtlippen 128 sind dabei in unterschiedlichen Abständen von einer senkrecht zur Längsachse 110 des Dichtelements 100 verlaufenden Quermittelebene 130 des Dichtelements 100 angeordnet.

Das Dichtelement 100 umfasst insbesondere einen Grundkörper 132, welcher vorzugsweise einstückig aus einem thermoplastischen Kunststoffmaterial gebildet ist.

Der Grundkörper 132 umfasst zwei dynamische Dichtabschnitte 116, einen oder mehrere statische Dichtabschnitte 122 und eine oder mehrere Federelementaufnahmen 126.

Der Grundkörper 132 kann beispielsweise wie folgt hergestellt werden:
Beispielsweise kann ein Rohling 134 des Grundkörpers 132 in einem Spritzgussverfahren hergestellt werden.

Der Rohling 134 des Grundkörpers 132 weist dabei lediglich abschnittsweise seine endgültige äußere Form auf.

Insbesondere sind lediglich die Federelementaufnahmen 126 bei der Herstellung des Rohlings 134 fertiggestellt.

Die Dichtabschnitte 116, 122 hingegen müssen zur Fertigstellung des Grundkörpers 132 nachbearbeitet werden, insbesondere durch spanende Bearbeitung, beispielsweise CNC-Bearbeitung.

Wie insbesondere aus dem Vergleich der Fig. 1 bis 3 hervorgeht, kann dabei beispielsweise zunächst eine Außenkontur bearbeitet werden, um die radial äußeren statischen Dichtabschnitte 122 fertigzustellen. Anschließend kann dann eine radial innere Bearbeitung zur Fertigstellung der dynamischen Dichtabschnitte 116 erfolgen.

Alternativ hierzu kann vorgesehen sein, dass der Rohling 134 beispielsweise in einem Spritzgussverfahren derart hergestellt wird, dass sowohl die statischen Dichtabschnitte 122 als auch die Federelementaufnahmen 126 nach der Durchführung des Spritzgussprozesses bereits die endgültige äußere Form aufweisen.

Lediglich der radial innere Bereich muss dann noch mechanisch nachbearbeitet werden, um die dynamischen Dichtabschnitte 116 fertigzustellen.

Insbesondere durch eine Kombination der Herstellung des Rohlings 134 in einem Hochdruckprozess und/oder einem Hochtemperaturprozess, beispielsweise einem Spritzgussprozess, einerseits und der nur teilweisen nachträglichen Bearbeitung zur Fertigstellung des Grundkörpers 132 andererseits kann der Grundkörper 132 und somit das gesamte Dichtelement 100 besonders effizient und kostengünstig hergestellt werden.

## Patentansprüche

1. Dichtelement (100), umfassend einen Grundkörper (132) aus einem thermoplastischen Kunststoffmaterial, welcher ein Spritzgussbauteil ist und nur einen Teil seiner endgültigen äußeren Form in einem Hochdruckprozess und/oder in einem Hochtemperaturprozess erhalten hat, wobei der Grundkörper (132) aus einem Fluor-Thermoplastmaterial gebildet ist, wobei der Grundkörper (132) ringförmig ausgebildet ist und zwei radial innere dynamische Dichtabschnitte (116) zur dynamischen Abdichtung an einem längs einer axialen Richtung (112) verschieblichen Bauteil (106) und einen oder mehrere radial äußere Dichtabschnitte (122) umfasst, wobei jeder dynamische Dichtabschnitt (116) eine, zwei oder mehr als zwei Dichtlippen (128) umfasst, wobei die dynamischen Dichtabschnitte (116) die jeweilige endgültige Form durch eine spanende Bearbeitung erhalten haben, wobei der eine oder die mehreren radial äußeren Dichtabschnitte (122) ihre endgültige äußere Form in dem Hochdruckprozess und/oder in dem Hochtemperaturprozess erhalten haben.

2. Dichtelement (100) nach Anspruch 1, wobei der Grundkörper (132) nur abschnittsweise eine Oberflächenbeschaffenheit aufweist, welche ein in einem Hochdruckprozess und/oder in einem Hochtemperaturprozess geformter und/oder fertiggestellter Körper aufweist.

3. Dichtelement (100) nach einem der Ansprüche 1 oder 2, wobei der Grundkörper (132) nur abschnittsweise eine Oberflächenbeschaffenheit aufweist, welche ein in einem Spritzgussprozess geformter und/oder fertiggestellter Körper aufweist.

4. Verwendung eines Dichtelements (100) nach einem der Ansprüche 1 bis 3 als Stangendichtung, Kolbendichtung und/oder Wellendichtung, insbesondere in einer Kraftstoffpumpe und/oder einer Kolbenpumpe.

5. Verfahren zur Herstellung eines Dichtelements (100), umfassend:
Herstellen eines Grundkörpers (132) des Dichtelements (100) aus einem thermoplastischen Kunststoffmaterial, wobei der Grundkörper (132) nur einen Teil seiner endgültigen äußeren Form in einem Hochdruckprozess und/oder in einem Hochtemperaturprozess, welcher ein Spritzgussprozess ist, erhält, wobei der Grundkörper (132) aus einem teilfluorierten oder vollfluorierten thermoplastischen Kunststoffmaterial hergestellt wird, wobei der Grundkörper (132) ringförmig ausgebildet ist und zwei radial innere dynamische Dichtabschnitte (116) zur dynamischen Abdichtung an einem längs einer axialen Richtung (112) verschieblichen Bauteil (106) und einen oder mehrere radial äußere Dichtabschnitte (122) umfasst, wobei der eine oder die mehreren radial äußeren Dichtabschnitte (122) ihre endgültige äußere Form in dem Hochdruckprozess und/oder in dem Hochtemperaturprozess erhalten, wobei die zwei dynamischen Dichtabschnitte (116) des Grundkörpers (132), welche jeweils eine, zwei oder mehr als zwei Dichtlippen (128) umfassen, zur dynamischen Abdichtung an einem beweglichen Bauteil (106) anschließend durch spanende Bearbeitung hergestellt werden.

6. Verfahren nach Anspruch 5, wobei der Grundkörper (132) des Dichtelements (100) nach der Durchführung des Hochdruckprozesses und/oder des Hochtemperaturprozesses nur abschnittsweise nachbearbeitet wird.

7. Verfahren nach Anspruch 6, wobei der Grundkörper (132) beschichtet wird.

## Claims

1. Sealing element (100), comprising a main body (132) formed from a thermoplastic material, which is an injection moulded component and has obtained only part of its final outer shape in a high-pressure process and/or in a high-temperature process, wherein the main body (132) is formed from a fluoro-thermoplastic material, wherein the main body (132) is annular and comprises two radially inner dynamic sealing portions (116) to provide a dynamic seal on an element (106) displaceable along an axial direction (112) and one or more radially outer sealing portions (122), wherein each dynamic sealing portion (116) comprises one, two or more than two sealing lips (128), wherein the dynamic sealing portions (116) have obtained the corresponding final outer shape by means of a machining operation, wherein the one or more radially outer sealing portions (122) have obtained their final outer shape in the high-pressure process and/or in the high-temperature process.

2. Sealing element (100) according to claim 1, wherein the main body (132) only in part has a surface finish which comprises a body formed and/or completed in a high-pressure process and/or in a high-temperature process.

3. Sealing element (100) according to either one of claims 1 or 2, wherein the main body (132) only in part has a surface finish which comprises a body formed and/or completed in an injection moulding process.

4. Use of a sealing element (100) according to any one of claims 1 to 3 as a rod seal, piston seal and/or shaft seal, in particular in a fuel pump and/or a piston pump.

5. Method for producing a sealing element (100), comprising:
producing a main body (132) of the sealing element (100) from a thermoplastic material, wherein the main body (132) obtains only part of its final outer shape in a high-pressure process and/or in a high-temperature process, which is an injection moulding process, wherein the main body (132) is produced from a partially fluorinated or fully fluorinated thermoplastic material, wherein the main body (132) is annular and comprises two radially inner dynamic sealing portions (116) to provide a dynamic seal on an element (106) displaceable along an axial direction (112) and one or more radially outer sealing portions (122), wherein the one or more radially outer sealing portions (122) obtain their final outer shape in the high-pressure process and/or in the high-temperature process, wherein the two dynamic sealing portions (116) of the main body (132), which each comprise one, two or more than two sealing lips (128), to provide a dynamic seal on a movable element (106) are then produced by machining.

6. Method according to claim 5, wherein the main body (132) of the sealing element (100) is subjected to a finishing operation only in part after the high-pressure process and/or the high-temperature process have/has been performed.

7. Method according to claim 6, wherein the main body (132) is coated.

## Revendications

1. Elément étanche (100), comprenant un corps de base (132) composé d'un matériau synthétique thermoplastique, lequel est un composant moulé par injection et a obtenu seulement une partie de sa forme extérieure définitive dans un processus haute pression et/ou dans un processus haute température,
dans lequel le corps de base (132) est formé à partir d'un matériau thermoplastique fluoré, dans lequel le corps de base (132) est réalisé en forme d'anneau et comprend deux sections étanches dynamiques (116) radialement intérieures pour l'étanchéification dynamique sur un composant (106) pouvant être coulissé le long d'une direction axiale (112) et une ou plusieurs sections étanches radialement extérieures (122), dans lequel chaque section étanche dynamique (116) comprend une, deux ou plus de deux lèvres étanches (128), dans lequel les sections étanches dynamiques (116) ont obtenu la forme définitive respective par un usinage par enlèvement de copeaux, dans lequel la ou les plusieurs sections étanches radialement extérieures (122) ont obtenu leur forme extérieure définitive dans le processus haute pression et/ou dans le processus haute température.

2. Elément étanche (100) selon la revendication 1, dans lequel le corps de base (132) présente seulement par endroits une propriété de surface, que présente un corps façonné et/ou confectionné dans un processus haute pression et/ou dans un processus haute température.

3. Elément étanche (100) selon l'une quelconque des revendications 1 ou 2, dans lequel le corps de base (132) présente seulement par endroits une propriété de surface, que présente un corps façonné et/ou confectionné dans un processus de moulage par injection.

4. Utilisation d'un élément étanche (100) selon l'une quelconque des revendications 1 à 3 en tant que joint d'étanchéité de tringle, joint d'étanchéité de piston et/ou joint d'étanchéité d'arbre, en particulier dans une pompe à carburant et/ou une pompe à piston.

5. Procédé de fabrication d'un élément étanche (100), comprenant :
la fabrication d'un corps de base (132) de l'élément étanche (100) à partir d'un matériau synthétique thermoplastique, dans lequel le corps de base (132) obtient seulement une partie de sa forme extérieure définitive dans un processus haute pression et/ou dans un processus haute température, lequel est un processus de moulage par injection, dans lequel le corps de base (132) est fabriqué à partir d'un matériau synthétique thermoplastique partiellement fluoré ou totalement fluoré, dans lequel le corps de base (132) est réalisé en forme d'anneau et comprend deux sections étanches dynamiques (116) radialement intérieures pour l'étanchéification dynamique sur un composant (106) pouvant être coulissé le long d'une direction axiale (112) et une ou plusieurs sections étanches radialement extérieures (122), dans lequel la ou les plusieurs sections étanches radialement extérieures (122) obtiennent leur forme extérieure définitive dans le processus haute pression et/ou dans le processus haute température, dans lequel les deux sections étanches dynamiques (116) du corps de base (132), lesquelles comprennent respectivement une, deux ou plus de deux lèvres étanches (128), sont fabriquées ensuite par usinage par enlèvement de copeaux pour l'étanchéification dynamique sur un composant (106) mobile.

6. Procédé selon la revendication 5, dans lequel le corps de base (132) de l'élément étanche (100) est usiné ultérieurement seulement par endroits après la mise en œuvre du processus haute pression et/ou du processus haute température.

7. Procédé selon la revendication 6, dans lequel le corps de base (132) est revêtu.
